# EUROPEAN PATENT APPLICATION

(11) **EP 0 993 882 A1**
(43) Date of publication of application: **19.04.2000**
(21) Application number: 99203154.2
(22) Date of filing: 27.09.1999
(51) Int. Cl.: B21D 5/02, G01B 5/24

(54) **Method for the adaptive folding of plates and device applying such a method**

(30) Priority: 13.10.1998 BE 9800733
(71) Applicant: Haco, naamloze vennootschap, 8800 Roeselare-Rumbeke (BE)
(72) Inventor: Coopman, Jose, 8900 Ieper (BE)
(74) Representative: Donné, Eddy

(57) **Abstract**

Method for the adaptive folding of plates, characterised in that, during the folding of the plate (12), the folding angle (A) of the plate (12) is constantly measured; in that the force exerted on the plate (12) by the stamp (3) is constantly measured simultaneously; in that the thus measured values are transmitted to the control unit of the folding machine, such that the force of the stamp (3) on the plate (12), which initially increases rather strongly (43), increases to a maximum value (44) which coincides with a folding angle (A) which is bigger than the desired folding angle (A); in that the force of the stamp (3) on the plate (12) is subsequently decreased to a random low value; in that the further course of the line (48) is then extrapolated from said line so as to calculate the folding angle (50) that would be obtained when the force of the stamp (3) on the plate (12) would be entirely removed; in that the thus calculated elastic rebound (51), increased by the number of degrees (52) of the angle (46) one wishes to obtain, is subtracted so as to subsequently make the stamp (3) carry out a movement which is so large that, on the basis thereof, the plate (12) is deformed at an angle which is equal to the desired angle (46), decreased with the total elastic rebound (51-52).

## Description

The present invention concerns a method for the adaptive folding of plates, in particular the adaptive folding of plates on press brakes.

The invention also concerns devices which apply the method for the adaptive folding of plates.

Such press brakes generally consist of two main parts in between which the plate is folded, namely a first part, generally the lower part which is called the matrix, and a second part, in this case the top part which is called the stamp, whereby a longitudinal groove is provided in the matrix with which the above-mentioned stamp can co-operate so as to fold the plate in between at a certain angle and whereby one of the above-mentioned parts, usually the stamp, is moved towards the matrix with a specific force so as to make the fold.

It is clear that the angle at which one wishes to fold a plate will be obtained by judiciously selecting a usually V-shaped groove which is provided in the matrix on the one hand, and the shape of the stamp working in conjunction with the matrix on the other hand, which is usually V-shaped as well.

It is known that a plate which is folded between such a matrix and a stamp, after the stamp has been released from the plate, springs back elastically, such that the angle at which the plate has been initially folded between the matrix and the stamp enlarges somewhat after the release of the plate.

The elastic rebound depends on several factors, such as the material of which the plate is made, whether the plate is folded with its folding line either or not parallel to the direction in which the plate was rolled during the manufacturing thereof, etc.

In order to take this rebound into account, it has been customary until now to make some test specimens.

During this test folding, the difference between the desired folding angle and the folding angle obtained after the rebound is measured, so as to subsequently enlarge the penetration depth of the stamp in order to try to obtain an angle, after the rebound of the folded plate, which coincides with the desired angle whereby, when this is not the case, the above-mentioned penetration depth is adjusted once more, etc. until the desired folding angle is obtained.

It is clear that such a method has considerable disadvantages which become all the more important as the number of desired specimens is smaller and the cost price of the material is higher.

Moreover, the folding of test specimens requires a lot of valuable time and increases the amount of waste material.

In order to avoid this disadvantage when folding plates, the invention aims a method and a device whereby angle measurements and/or stamp force measurements are carried out during the folding, so as to adjust the penetration depth during the folding process and to thus try to obtain a product which has the desired folding angle at once, without having to make several test specimens.

The device according to the invention which makes it possible to obtain a product having the desired folding angle at once is entirely adaptive to this aim, in other words, while the plate is being folded, the result of different measurements, in particular the angle measurement of the folded plate and the force exerted on this plate by the stamp, is used in this device to adjust the movement of the stamp in relation to the matrix.

What is very important according to this method, is that the plate to be folded is never released, but is always maintained in the matrix, be it with a slight pressure of the stamp on the plate, while the measurements are being carried out.

Another important aspect hereby is that the above-mentioned measuring devices are provided in the stamp, which is particularly advantageous.

The method for the adaptive folding of plates according to the invention mainly consists in that the folding angle of the plate is constantly measured during the folding of the plate, in that the force exerted on the plate by the stamp is constantly measured simultaneously, in that the thus measured values are transmitted to the control unit of the folding machine, such that the force of the stamp on the plate, which initially increases rather strongly, increases to a maximum value which coincides with a folding angle which is larger than the desired folding angle; in that the force of the stamp on the plate is subsequently decreased to a random low value of for example 20% of the above-mentioned maximum value; in that the further course of this line is then extrapolated from the line determined by the rebound so as to calculate the folding angle that would be obtained when the force of the stamp on the plate would be entirely removed; in that the thus calculated elastic rebound, increased by the number of degrees of the angle one wishes to obtain, is subtracted; to then make the stamp carry out a movement which is so large that the plate is deformed at an angle on the basis thereof which is equal to the desired angle, decreased with the total elastic rebound.

The device according to the invention which applies the above-mentioned method for the adaptive folding of plates mainly consists in that at least one device is provided in the stamp to constantly measure the folding angle during the folding on the one hand, and in that at least one device is provided to also constantly measure the force exerted by the stamp on the plate during the folding on the other hand, and whereby the values measured by the above-mentioned devices are constantly transmitted to the control unit of the folding machine so as to influence the movement of the stamp in relation to the matrix as a function of the normal elastic rebound of the folded plate.

In order to better explain the characteristics of the invention, the following preferred embodiment is described as an example only without being limitative in any way, with reference to the accompanying drawings, in which:
figure 1 represents a very schematic view in perspective of a press brake in which the device according to the invention is applied;
figure 2 represents a schematic section according to line II-II in figure 1;
figure 3 shows a view which is similar to that in figure 2, but during the folding operation;
figure 4 represents a schematic section according to line IV-IV in figure 1 to a larger scale;
figure 5 represents a section according to line V-V in figure 4;
figure 6 shows a section according to line VI-VI in figure 4;
figure 7 shows a view which is similar to that in figure 4, but during the folding operation;
figure 8 represents a schematic section according to line VIII-VIII in figure 1 to a larger scale;
figure 9 represents a force/folding angle curve.

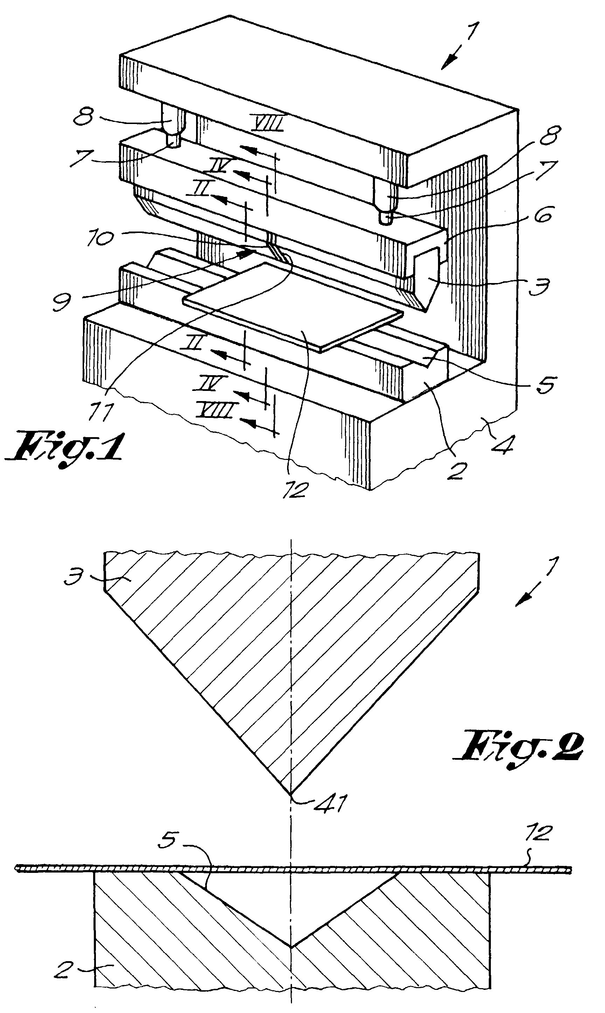

Figure 1 is a schematic representation of a press brake 1 which mainly consists of a lower part or matrix 2 and of a top part or stamp 3.

The matrix 2, which is fixed in an interchangeable manner on the frame 4, has a known V-shaped groove 5 whose width is mainly determined by the thickness of the material to be folded, whereas the stamp 3 is fixed in an interchangeable manner in a longitudinal beam 6 which is connected to the piston rod 7 of hydraulic cylinders 8 at least towards the ends, which are themselves fixed to the above-mentioned frame 1.

The device 9 according to the invention is provided in the stamp 3, which mainly follows the dimensions of the stamp 3 and which consists of a device 10 for measuring the folding angle on the one hand, and a device 11 for measuring the stamp force on the other hand, placed next to it.

Between the matrix 2 and the stamp 3 can be provided a plate 12 to be folded.

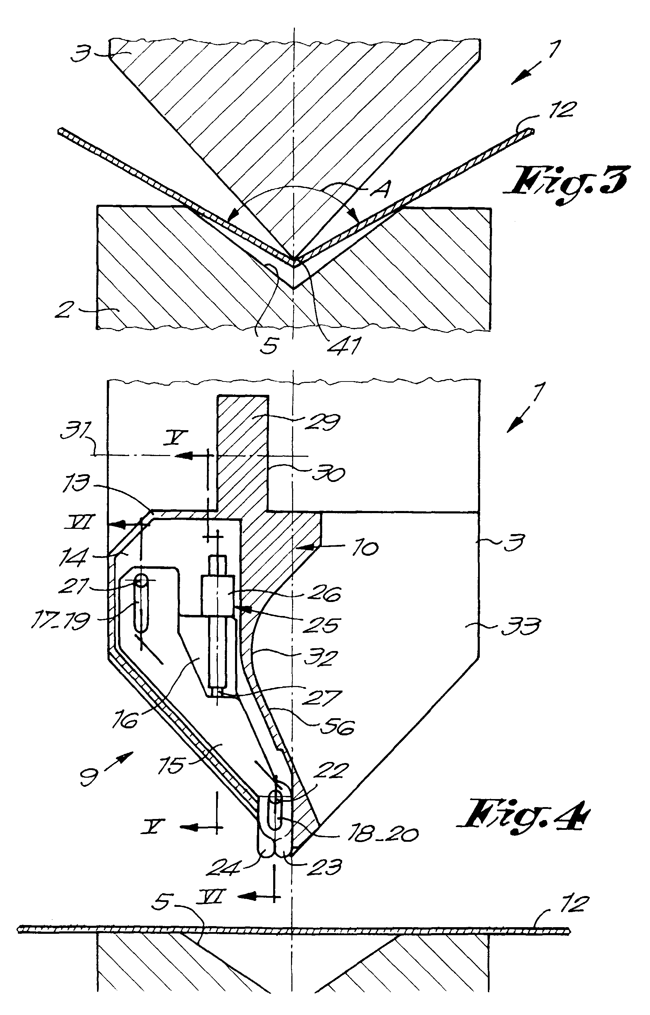

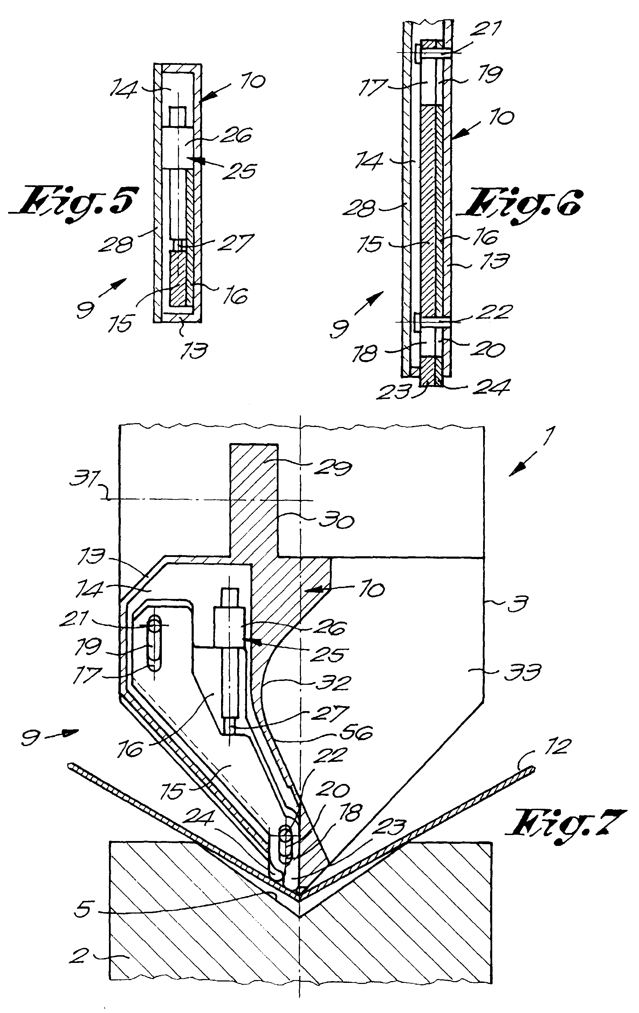

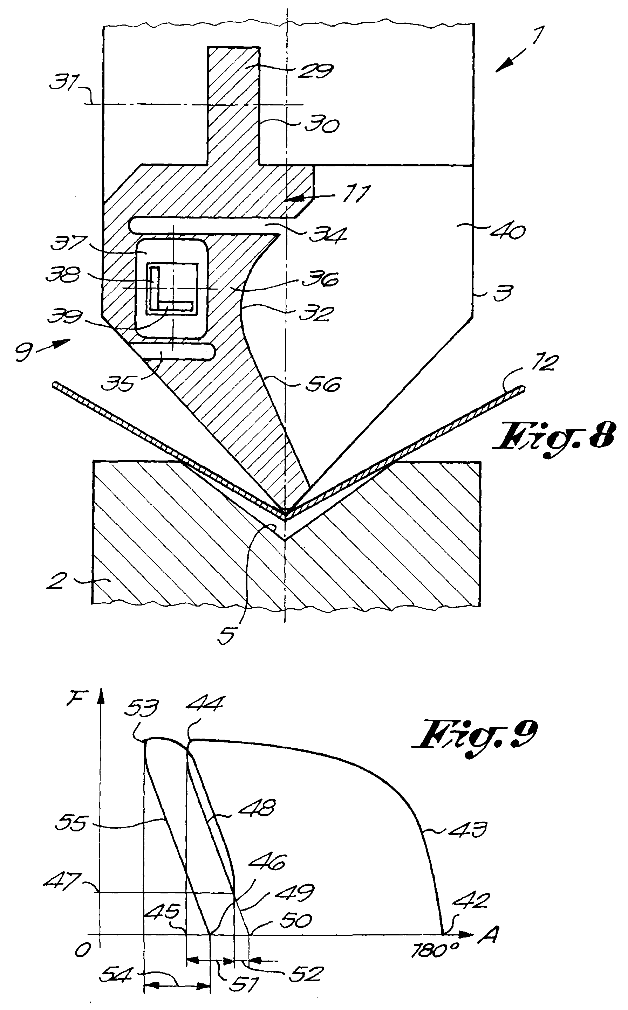

The device 10 consists, as represented in figures 4 to 7, of a housing 13 which is made hollow so as to form a space 14 in which the actual measuring elements are provided.

The latter mainly consist of two feeler bodies, 15 and 16 respectively, which each have two parallel slots, 17-18 and 19-20 respectively, whereby these slots can move over guiding pins, 21 and 22 respectively, which are fixed on the housing 13.

The lower ends of the feeler bodies 15 and 16, which so to say form the actual feelers 23-24, are made semicircular and protrude outside the housing 13.

Between the feeler bodies 15 and 16 is provided a signal generator 25 which in this case consists of a casing 26 which rests on and is for example fixed to the feeler body 16, and a pen 27 which can move in said casing and which rests on the feeler body 15.

The housing 13 is normally closed off by means of a lid 28, which, for clarity's sake, is not represented in figures 4 and 7.

The external form of the housing 13 is made such that it does not exceed the circumscription of the stamp 3, save for the actual feelers 23-24.

At the top, the housing 17 has a protrusion 29 which can be provided in a groove 30 in the stamp 3 and which can be connected to the latter in an appropriate manner by means of a fastening which is schematically represented by 31 which may be formed of a bolt, clamping screw or such.

At the back, the housing 13 finally has an excavation 32 whose aim will become clear hereafter.

In the stamp 3, on the place where the device 10 is situated, will be provided a space 33 in which the housing 13 can be applied.

The device 11 has a shape which can mainly be compared to the shape of the above-mentioned housing 13, whereby in this case the body of the device 11 is provided with recesses, 34 and 35 respectively, which are provided on either side in the body of the device 11, whereby the central part 36 of the above-mentioned body, formed between the recesses 34 and 35, has a space 37 in which deformation readers, for example strain gauges, are fixed which are schematically represented by 38 and 39.

The body of the device 11 is provided in a space 40 in the stamp 3 in a similar manner as the housing 3 and is fixed in this stamp in a similar manner as the housing 13.

As will appear from figure 1, the devices 10 and 11 only have a restricted width in relation to the length of the stamp 3, for example a width in the order of magnitude of 1 to 2 cm.

The working of the device according to the invention is very simple and as follows.

When one wishes to fold a plate 12 at a certain angle, one has to provide an appropriate matrix 2 and a stamp 3 working in conjunction with it in the press brake 1, depending among others on the thickness of the plate, whereby the stamp 3 is provided with a device 10 for measuring the folding angle and a device 11 for continuously measuring the force exerted on the plate 12 by the stamp 3.

After the plate 12 has been provided on the matrix 2, the stamp 3 will be moved towards the matrix 2 by exciting the hydraulic cylinders 8.

As soon as the stamp 3 has touched the plate 12, also the feelers 23 and 24 will have touched this plate.

At the moment when the point 41 of the stamp 3 deforms the plate 12 so as to fold this plate at a certain angle A, the feelers 23 and 24 will be moved over different vertical distances, which results in that the feeler bodies 15 and 16 undergo a relative movement, which is possible as they are provided in the housing 13 such that they can shift freely in relation to one another, thanks to the co-operation of the pins 21 and 22 with the grooves 17 to 20.

This relative movement has for a result that the signal generator 25 is moved over a proportional distance as its casing 26 rests on and is for example rigidly fixed to the feeler body 16, and its pen 27 is fixed to the feeler body 15 in any other appropriate manner whatsoever, for example as it retains contact with the feeler body 15 thanks to the effect of the gravitational force, under the influence of a spring or such.

The signal generator 25 thus so to say measures the vertical difference in distance covered by the feelers 23 and 24, whereby this difference in distance generates a signal, for example an electric signal, which is transmitted to the control unit of the press brake so as to influence the relative movement of the matrix 2 and the stamp 3 in relation to the desired angle A at which the plate 12 should be folded.

The above-mentioned electric signal can be obtained in any way whatsoever, for example by providing an adjustable resistor or potentiometer or such in the signal generator 25.

Simultaneously with the movement of the stamp 3, the device 11 is moved against the plate 12, so that the body of the device 11, thanks to the presence of recesses 34 and 35 which are provided in the body on either side, will undergo a slight deformation, mainly in its central part 36, such that the deformation readers 38 and 39 are influenced by it and generate an electric signal which is also transmitted to the control unit of the press brake so as to influence, in combination with the electric signal of the signal generator 25, the relative movement of the matrix 2 and the stamp 3 in relation to the desired angle A at which the plate 12 should be folded.

Figure 9 represents a force/folding angle curve which shows the evolution of the force exerted by the stamp 3 on the plate 12 as a function of the folding angle, whereby the above-mentioned force is plotted out in the ordinate Y and the folding angle in the abscissa X.

When the stamp 3 touches the plate 12, the folding angle A is equal to 180° and the folding force F is equal to zero, in other words the starting point of the folding operation coincides with point 42 in figure 9.

As the stamp 3 is moved downward, the force F exerted on the plate 12 by the stamp 3 will rise rather suddenly according to the curve 43 so as to very quickly obtain an almost constant force 44 when the folding angle A (45) comes near the actually required folding angle which is indicated by 46.

At this moment, the force exerted on the plate 12 by the stamp 3 is reduced to a value 47 which amounts to for example about 20% of the force 44.

While the force F is being reduced, the points which coincide with the course of the line 48 must be registered so that, when the point 47 is reached, the further course of the line 48 can be estimated by means of extrapolation.

This course is represented by the line 49 which ends in point 50 on the abscissa.

The above-mentioned curve indicates that, as the force F is reduced from 44 to 47, the rebound amounts to a number of degrees 51, whereas the course of the line 49 indicates that the total rebound amounts to a number of degrees which is equal to the number of degrees 51, increased by the number of degrees 52.

Since the total rebound is known at this moment, the stamp 3 will be directed into an angle which coincides with the value 53 which is calculated in relation to the rebound 51-52, such that when the force of the stamp is subsequently removed entirely, the plate 12 rebounds over a number of degrees 54 which is equal to the number of degrees 51, increased by the number of degrees 52.

While the force from point 53 to point 46 is reduced, it is of course possible to carry out one or several measurements on the course of the line 55 so as to check, on the basis of these measurements, whether the postulated result is within the desired tolerance range and, if not, to repeat the above-mentioned cycle, and such as often as necessary so as to finally obtain the desired result.

It is clear that the course of the curve as represented in figure 9 is the result of the measurements which are carried out during the folding by the devices 10 and 11 and which are continuously supplied to the control unit of the stamp 3.

By making use of a device according to the invention, one obtains among others the following advantages.

A first advantage is that the force of the stamp 3 on the matrix 2 and the angle at which the plate 12 is folded can be measured in each other's immediate vicinity, which implies that it is not necessary to provide different force measuring devices which are distributed over the length of the matrix 2. Moreover, the device 9 according to the invention occupies little space in the length of the stamp 3.

Another advantage is that the devices 10 and 11 are both provided in the stamp 3, so that the machine is less dependent of the type of plate to be folded, in particular the thickness thereof, since it is the matrix 2 which needs to be replaced rather than the stamp 3.

Another advantage is that existing folding machines can be very easily equipped with devices 10 and 11 so as to make adaptive folding possible, since very few adjustments are required therefor.

Yet another advantage is that the devices 10 and 11 are situated above the plate 12, so that they are less sensitive to dirt, oil or such.

As the device 10 occupies very little space, this offers the advantage that it becomes possible to fold two angles which are situated very close to one another in the same direction, whereby the entire stamp will be made in this case according to the form of the line 56 of the devices 10 and 11.

Another advantage is that the plate 12, during the entire folding operation, is maintained between the stamp 3 and the matrix 2, with a random force different from zero, so that the plate 12 cannot move and/or cannot fall from the machine.

It should be noted that in the above-described embodiment, always half an angle is observed. There is nothing to prevent us, however, to observe two half angles, in other words to provide two combined devices 10, so that the entire plate angle is measured at once.

The present invention is by no means limited to the above-described embodiment represented in the accompanying drawings; on the contrary, it can be made in all shapes and dimensions while still remaining within the scope of the invention.

## Claims

1. Method for the adaptive folding of plates, characterised in that, during the folding of the plate (12), the folding angle (A) of the plate (12) is constantly measured; that the force exerted on the plate (12) by the stamp (3) is constantly measured simultaneously; in that the thus measured values are transmitted to the control unit of the folding machine, such that the force of the stamp (3) on the plate (12), which initially increases rather strongly (43), increases to a maximum value (44) which coincides with a folding angle (A) which is bigger than the desired folding angle (A); in that the force of the stamp (3) on the plate (12) is subsequently decreased to a random low value; that the further course of the line (48) is then extrapolated from said line so as to calculate the folding angle (50) that would be obtained when the force of the stamp (3) on the plate (12) would be entirely removed; in that the thus calculated elastic rebound (51), increased by the number of degrees (52) of the angle (46) one wishes to obtain, is subtracted so as to subsequently make the stamp (3) carry out a movement which is so large that, on the basis thereof, the plate (12) is deformed at an angle which is equal to the desired angle (46), decreased with the total elastic rebound (51-52).

2. Method according to claim 1, characterised in that, if necessary, the above-mentioned extrapolation is repeated.

3. Device for applying the method for the adaptive folding of plates according to claim 1 or 2, whereby use is made of a matrix (2) with a V-shaped longitudinal groove (5) and a stamp (3) which can be moved in relation to this matrix (2) so as to fold an plate (12) at a certain angle (A), characterised in that at least one device (10) is provided in the stamp (3) to constantly measure the folding angle (A) during the folding on the one hand, and at least one device (11) is provided to constantly measure the force exerted on the plate (12) by the stamp (3), also during the folding, on the other hand, and whereby the values measured by the devices (10 and 11) are constantly transmitted to the control unit of the folding machine, so as to together influence the movement of the stamp (3) in relation to the matrix (2) as a function of the normal elastic rebound of the folded plate (12).

4. Device according to claim 3, characterised in that the device (10) for constantly measuring the folding angle (A) of a plate (12) during the folding is mainly formed of two feeler bodies (15) and (16) which are placed next to one another and which can shift in relation to one another, whereby a signal generator (25) is provided between these feeler bodies (15) and (16) which is influenced by the relative movement of the above-mentioned feeler bodies.

5. Device according to claim 4, characterised in that the feeler bodies (15) and (16) are provided with grooves (17) to (20) via which the feeler bodies (15) and (16) can shift along guiding pins (21-22), whereby the latter are fixed in the housing (13) in which also the feeler bodies (15) and (16) are situated.

6. Device according to claim 4 or 5, characterised in that the lower free ends of the feeler bodies (15) and (16) protrude outside the housing (13) and are rounded so as to form actual feelers (23) and (24).

7. Device according to claim 4, characterised in that the signal generator (25) consists of a casing (26) which rests on one of the feeler bodies (16) and a pen (27) which can move inside this casing which constantly retains contact with the other feeler body (15).

8. Device according to claim 3 or 4, characterised in that the signal generator (25) consists of an adjustable resistor or potentiometer, a piezo-electric material, or such.

9. Device according to any of claims 3 to 8, characterised in that the device (10) for measuring the folding angle (A) is provided and fixed in the stamp (3).

10. Device according to claim 3, characterised in that the device (11) for constantly measuring the force exerted on the plate (12) by the stamp (3) mainly consists of a body which can be provided and fixed in the stamp (3), whereby recesses (34) and (35) are provided in this body which are provided on either side of this body and in between which, in the thus formed central part (36), is provided a space (37) in which are provided deformation readers (38) and (39).

11. Device according to any of the preceding claims, characterised in that the housing of the device (10) and the body of the device (11) have a shape which is contained within the shape of the stamp (3).

12. Device according to claim 11, characterised in that the shape of the housing of the device (10) and the body of the device (11) coincides with the shape of the stamp (3).
